# EUROPÄISCHE PATENTSCHRIFT

(11) **EP 1 698 524 B1**
(45) Veröffentlichungstag und Bekanntmachung des Hinweises auf die Patenterteilung: **30.04.2008**
(21) Anmeldenummer: 06004407.0
(22) Anmeldetag: 03.03.2006
(51) Int. Cl.: B60R 21/20

(54) **Fahrzeugtürverkleidung und Verfahren zu deren Herstellung**
Vehicle side door cladding and method of manufacture for the same
Panneau de revêtement d'une porte de véhicule et la methode de production

(30) Priorität: 04.03.2005 DE 102005010025
(43) Veröffentlichungstag der Anmeldung: 06.09.2006
(73) Patentinhaber: Lisa Dräxlmaier GmbH, 84137 Vilsbiburg (DE)
(72) Erfinder: Riester, Christoph, 85445 Aufkirchen (DE); Dax, Michael, 84169 Altfraunhofen (DE); Graf, Friedrich, 84307 Eggenfelden (DE); Lehmann, Lutz, 84030 Ergolding (DE); Sigl, Georg, 94424 Arnstorf (DE); Sieber, Marc, 84028 Landshut (DE); Sperl, Thomas, 94405 Landau/Isar (DE)
(74) Vertreter: HOFFMANN EITLE

(56) Entgegenhaltungen:
- EP-A- 1 445 156
- DE-A1- 10 106 436
- US-A1- 2002 060 447
- US-A1- 2004 164 528

## Beschreibung

### Gebiet der Erfindung

Die Erfindung betrifft eine Fahrzeugtürverkleidung für ein Kraftfahrzeug mit einer Kopfaufprallschutzeinrichtung sowie ein Verfahren zu deren Herstellung.

Neben Seitenaufprallschutzeinrichtungen, die häufig als Seitenairbag bezeichnet werden und im Falle ihrer sensorgesteuerten Auslösung einen Kraftfahrzeuginsassen vor allen Dingen im Becken- und Thoraxbereich schützen sollen, kommen vermehrt auch Kopfaufprallschutzeinrichtungen in Kraftfahrzeugen zum Einsatz. Derartige Kopfaufprallschutzeinrichtungen werden häufig als Headbag bezeichnet und dienen dazu, einen Fahrzeuginsassen gegen ein Aufprallen des Kopfes auf die Seitenscheibe zu schützen.

Herkömmlicherweise werden Kopfaufprallschutzeinrichtungen im Dachhimmel von Fahrzeugen integriert und umfassen einen oder mehrere Gassäcke, die sich bei Auslösung der Schutzeinrichtung aus dem Dachbereich eines Fahrzeuges entfalten.

Bei Kraftfahrzeugen, bei denen die Unterbringung einer Kopfaufprallschutzeinrichtung im Dachbereich nicht möglich ist, wie bei halboffenen Cabriolets, müssen die Gassäcke bzw. Luftsäcke einer Kopfaufprallschutzeinrichtung in den Bereich der Türseitenverkleidung integriert werden.

### Stand der Technik

Die Innenverkleidung eines üblichen Türaufbaus umfasst eine Armauflage, unter der sich derjenige Bereich befindet, in dem sich häufig eine Ablagetasche befindet. Über der Armauflage befindet sich das sogenannte Mittelfeld der Türverkleidung. Der Übergangsbereich zwischen Mittelfeld und der Oberseite der Türverkleidung, d.h. der Krümmungsbereich zwischen Mittelfeld und dem im Wesentlichen horizontal angeordneten Übergangsbereich der Türverkleidung zur Seitenscheibe wird als Bordkante bezeichnet.

Bei der in der US 5,231,253 dargestellten Lösung wird eine Kopfaufprallschutzeinrichtung dargestellt, die sich nach dem Öffnen des Mittelfelds der Türverkleidung entfaltet und in Bezug auf den verwendeten Gassack ausreichend groß bemessen ist, um auch den Kopf des Fahrzeuginsassen im Falle eines Seitenaufpralls zu schützen.

In der EP 1 445 156 A1 ist eine Seitenaufprallschutzeinrichtung für einen Fahrzeuginsassen beschrieben, bei der ein vorgefertigtes Airbagmodul bestehend aus Gassack mit äußerer Umhüllung, Gaslanze und Druckgasquelle an der Seitenwand der Fahrzeugtür durch Schrauben oder Ähnliches befestigt ist. Bei Auslösung des Airbagmoduls reißt die Fahrzeugtürverkleidung über die gesamte Länge auf, wobei zur Unterstützung dieser Bewegung in der Stirnseite der Verkleidung etwa in Höhe des verschwenkbaren oberen Randbereichs eine definierte Schwächung der Verkleidung vorgesehen ist. Die Schwächung kann hierbei durch mehrere aneinandergesetzte schlitzförmige Öffnungen gebildet sein oder aber eine durchgehende, V-förmige oder halbkreisförmige Einkerbung am Trägerteil der Verkleidung sein.

Die US 2004/164528 A1 zeigt eine Sicherheitseinrichtung in Form eines mit Gas füllbaren Schutzsacks, der sich entlang einer Innenseite einer Seitenscheibe einer Tür zum Aufprallschutz für einen benachbarten Insassen erstreckt. Das Paket des Schutzsacks ist in vollem Umfang innerhalb eines Türkörpers der Tür angeordnet und der Schutzsack entfaltet sich beim Aufblasen von dem Türkörper aus in Richtung eines Daches.

Die US 2002/060447 A1 zeigt eine Baugruppe bestehend aus einer Sitzlehne und einem Gassackmodul, wobei die Sitzlehne einen Rahmen, eine Polsterung und ein Verkleidungsteil aufweist und wobei das Gassackmodul einen Schusskanal aufweist, der an dem Rahmen angebracht ist. Das Verkleidungsteil ist starr ausgebildet, während die Polsterung im Bereich des Übergangs zum Verkleidungsteil derart nachgiebig ist, dass durch Verformung der Polsterung ein Spalt zwischen dem Verkleidungsteil und der Polsterung zum Austreten des Gassacks aus der Sitzlehne gebildet werden kann.

### Darstellung der Erfindung

Der Erfindung liegt die Aufgabe zugrunde, eine Fahrzeugtür für ein Kraftfahrzeug so zu gestalten, dass sich eine für einen Fahrzeuginsassen nicht sichtbare Kopfaufprallschutzeinrichtung integrieren lässt, wobei die Montage der Fahrzeugtür besonders einfach sein soll.

Diese Aufgabe wird durch eine Fahrzeugtürverkleidung für ein Kraftfahrzeug mit den Merkmalen des Anspruchs 1 gelöst. Die Verfahren zur Vormontage einer Fahrzeugtürverkleidung werden durch die Merkmale der Ansprüche 18 und 19 beschrieben. Bevorzugte Ausführungsformen folgen aus den übrigen Ansprüchen.

Der Erfindung liegt der Gedanke zugrunde, eine Fahrzeugtürverkleidung für ein Kraftfahrzeug mit einer Kopfaufprallschutzeinrichtung für einen Fahrzeuginsassen zu schaffen, die einen Bordkantenträger, eine Kopfaufprallschutzeinrichtung, eine Schaumschicht über dem Bordkantenträger und einen Airbagträger der Kopfaufprallschutzeinrichtung sowie eine Dekorschicht auf der Schaumschicht umfasst. Die Schaumschicht ist hierbei so gestaltet, dass sie sich bei Auslösung der Kopfaufprallschutzeinrichtung leicht vom Airbagträger abhebt. Der Bordkantenträger der Fahrzeugtürverkleidung weist eine Aussparung zur Befestigung der Kopfaufprallschutzeinrichtung in einem Bereich auf, der sich nach der Montage der Fahrzeugtürverkleidung in der Fahrzeugtür nahe der Seitenscheibe der Fahrzeugtür befindet. Die Kopfaufprallschutzeinrichtung, die im üblichen Sprachgebrauch einem Headbag, nicht aber einem Seitenairbag entspricht, umfasst einen luftdicht mit dem Bordkantenträger verbundenen Airbagträger, einen Luftsack, der randseitig am Airbagträger luftdicht befestigt ist sowie einen Gasgenerator, der fest mit dem Airbagträger verbunden ist. Die Kopfaufprallschutzrichtung stellt somit ein Fertigungsmodul dar, bei dem nicht nur der Airbagträger und Luftsack, sondern auch der Gasgenerator bereits als eine Einheit vorgesehen sind. Der Airbagträger ist luftdicht mit dem Bordkantenträger verbunden, d.h. das gesamte Modul befindet sich in der Aussparung des Bordkantenträgers, wobei der Airbagträger fest mit dem die Aussparung umgebenden Bordkantenträger verbunden ist. Die Schaumschicht erstreckt sich über den Bordkantenträger sowie, im Bereich der Aussparung, über den Airbagträger. Somit ist eine durchgängige Schaumschicht vorhanden, über die sich nicht die Position der Aussparung bzw. die Position der Kopfaufprallschutzeinrichtung erkennen lässt. Gleiches gilt für die auf der Schaumschicht auf der dem Borkantenträger abgewandten Seite vorgesehene Dekorschicht. Auch die Dekorschicht ist so gestaltet, dass es für einen Fahrzeuginsassen nicht erkennbar ist, wo sich die in die Fahrzeugtürverkleidung integrierte Kopfaufprallschutzeinrichtung befindet. Eine äußerlich erkennbare Schwächung ist deswegen nicht nötig, weil die biegsame Schaumschicht sich bei Auslösung der Kopfaufprallschutzeinrichtung leicht vom Airbagträger abhebt.

Ein wesentlicher Vorteil der erfindungsgemäßen Fahrzeugtürverkleidung besteht darin, dass diese bereits mit der vormontierten Kopfaufprallschutzeinrichtung bereitgestellt werden kann. Die Fahrzeugtürverkleidung kann somit als Ganzes bei der Türmontage eingesetzt werden. Eine zusätzliche Befestigung des Airbagträgers am Rohbau der Fahrzeugtür ist nur optional und kann zudem bei entsprechender Formgebung, z.B. bei Vorsehen eines hakenförmigen Befestigungsansatzes am Airbagträger, der den Rohbau der Fahrzeugtür oder ein mit diesem verbundenes Bauelement umgreift, ohne einen zusätzlichen Montageschritt erfolgen.

Das Verfahren zur Vormontage einer wie beschriebenen Fahrzeugtürinnenverkleidung umfasst die folgenden Schritte. Zunächst wird die Aussparung im Borkantenträger der Fahrzeugtürverkleidung mit einer abnehmbaren Blende verschlossen. Zu diesem Zeitpunkt ist somit die Kopfaufprallschutzeinrichtung noch nicht am Bordkantenträger befestigt. In einem nachfolgenden Schritt wird eine Haut auf den Bordkantenträger hinterschäumt. Es wird dabei zwischen zwei Formträgern geschäumt, wobei ein Formträger den mit der abnehmbaren Blende verschlossenen Bordkantenträger und die andere Form die Dekorschicht trägt. Nach dem Hinterschäumen wird die Blende abgenommen und anstelle der Blende die Kopfaufprallschutzeinrichtung als bereits vormontierte Baueinheit eingesetzt und befestigt.

Alternativ kann anstelle des Hinterschäumens einer Haut auf den Bordkantenträger auch zunächst die Schaumschicht in einer geschlossenen Form erzeugt werden und in einem getrennten, nachfolgenden Schritt die Dekorschicht auf die Schaumschicht aufgebracht, vorzugsweise aufgeklebt oder aufkaschiert werden.

Nach einer bevorzugten Ausführungsform der Erfindung weist die Kopfaufprallschutzeinrichtung mindestens eine Befestigungseinrichtung zum Herstellen einer Verbindung mit dem Rohbau der Fahrzeugtür auf. Hierbei kann es sich nach einer bevorzugten Ausführungsform um einen hakenförmigen Abschnitt des Airbagträgers handeln, der im Montagezustand einen Teil der mit dem Rohbau der Fahrzeugtür verbundenen Türdichtung umgreifen kann. Diese Ausführungsalternative ist besonders vorteilhaft, weil sich die optional gewünschte Verbindung zwischen der Kopfaufprallschutzeinrichtung und dem Rohbau der Fahrzeugtür automatisch bei der Montage der komplett vormontierten Fahrzeugtürverkleidung einstellt. Es ist kein zusätzlicher Arbeitsschritt erforderlich. Alternativ kann aber auch der Airbagträger mit einer Befestigungslasche versehen sein, die mit dem Rohbau der Fahrzeugtür verschraubt wird. In diesem Zusammenhang ist es besonders günstig, dass sich die Kopfaufprallschutzeinrichtung nur im Bereich der Bordkante der Fahrzeugtürverkleidung befindet. Es kann somit zuerst der Bordkantenbereich der Fahrzeugtürverkleidung montiert werden, daraufhin der Airbagträger über die daran angebrachte Lasche mit dem Rohbau der Fahrzeugtür verschraubt werden und erst anschließend die weiteren Hauptbestandteile der Türinnenverkleidung montiert werden, wie Mittelteil, Armauflage und Kartenfach. Alternativ können aber auch eine oder mehrere dieser Komponenten bereits mit dem Bordkantenbereich einstückig verbunden sein und z.B. nur das Mittelfeld der Türverkleidung nachträglich befestigt werden.

Eine derartige Gestaltung kann auch den Vorteil besitzen, dass im Reparaturfall ein leichterer Zugang zu Komponenten im Türaufbau besteht, ohne die gesamte Türverkleidung abnehmen zu müssen.

Nach einer bevorzugten Ausführungsform der Erfindung weist der Airbagträger eine von der Schaumschicht weg gerichtete, gasdicht abgeschlossene erste Kammer auf, in welcher der Gasgenerator angeordnet ist, wobei die erste Kammer mindestens eine, vorzugsweise eine Vielzahl von Durchtrittsöffnungen für Gas auf der zur Schaumschicht weisenden Seite aufweist. Dabei ist es besonders bevorzugt, dass die erste Kammer auf der zur Schaumschicht weisenden Seite von einer einzelnen Lage des Gewebes des Luftsackes bedeckt ist. Mit anderen Worte befindet sich eine Lage des Luftsackgewebes zwischen dem Airbagträger und der Schaumschicht. Um eine möglichst schnelle Entfaltung des Luftsackes zu ermöglichen, ist der Airbagträger mit einer Vielzahl von Durchtrittsöffnungen versehen, durch welche die im Gasgenerator bei Auslösen der Kopfaufprallschutzeinrichtung erzeugte Gasmenge in den meist als Luftsack bezeichneten Gassack eingeblasen wird.

Da eine einzelne, glatt über dem Airbagträger liegende Lage des Gewebes des Luftsackes naturgemäß nur einen geringen Teil der Oberfläche des Luftsackes darstellt, weist der Airbagträger nach einer bevorzugten Ausführungsform mindestens eine zweite Kammer auf, welche zur Innenseite der Fahrzeugtür abgeschlossen ist und dimensioniert ist, um kompakt gefaltete Lagen des Luftsackes aufzunehmen.

Vorzugsweise ist nur eine einzige zweite Kammer vorgesehen, wobei die erste Kammer in Montageposition näher zur Seitenscheibe der Fahrzeugtür und die zweite Kammer auf derjenigen Seite der ersten Kammer angeordnet ist, die dem Mittelfeld der Fahrzeugtürverkleidung zugewandt ist. Diese Anordnung einer ersten Kammer sowie einer zweiten Kammer ist vorteilhaft, weil bei Auslösung der Kopfaufprallschutzeinrichtung der Luftsack seine größte Kraft in unmittelbarer Umgebung der ersten Kammer entfaltet, in der sich der Gasgenerator befindet. Nachdem angestrebt wird, dass die Schaumschicht sich bei Auslösung der Kopfaufprallschutzreinrichtung leicht vom Airbagträger abhebt und zudem bevorzugt ist, dass sich der Luftsack vor allen Dingen entlang der Seitenscheibe der Fahrzeugtür von der Türverkleidung nach oben entfaltet, erscheint diese Anordnung der ersten und zweiten Kammer besonders vorteilhaft.

Aus der DE 101 17 938 A1 ist eine vergleichbare Konfiguration eines Airbag im Bereich der Instrumententafel eines Kraftfahrzeugs beschrieben. Hier sind zwar zwei zweite Kammern vorgesehen und keine vormontierbare, modulartige Einheit einschließlich Gasgenerator vorbeschrieben, doch lässt sich der prinzipielle Aufbau eines Airbagmoduls mit einer einzelnen, über einen mit Gasdurchtrittsöffnungen versehenen Träger gespannten Lage sowie gefalteten Lagen in angrenzenden Kammern entnehmen.

Abweichend von der Formgestaltung der zweiten Kammern nach der DE 101 17 938 A1 ist es bevorzugt, die zweite Kammer zur Schaumschicht hin mit einer verkleinerten, vorzugsweise nur schlitzförmigen Durchtrittsöffnung für das Gewebe des Luftsackes zu versehen, wobei der Öffnungsquerschnitt der schlitzförmigen Durchtrittsöffnung geringer ist als die Querschnittsabmessungen der zweiten Kammer. Die Erfordernisse an die Druckfestigkeit einer Türinnenverkleidung, insbesondere im Bordkantenbereich, ist sehr unterschiedlich zu denen im Bereich der Instrumententafel. So muss der Bordkantenbereich sehr hohen, von außen aufgebrachten Druckkräften standhalten können. Daher ist es vorteilhaft, den Öffnungsquerschnitt der zweiten Kammer so weit wie möglich zu verringern und die durch die zweite Kammer gebildete Öffnung durch den Airbagträger weitgehend zu verschließen. Die schlitzförmigen Durchtrittsöffnungen können dabei Querschnittsabmessungen aufweisen, die weniger als die Hälfte der Querschnittsabmessungen der zweiten Kammer sind, vorzugsweise weniger als ein Viertel der Querschnittsabmessungen der zweiten Kammer sind. Die schlitzförmigen Durchtrittsöffnungen müssen lediglich ausreichend groß vorgesehen sein, um ein ungehindertes Entfalten des Luftsackes verbunden mit einem mit ausreichender Geschwindigkeit erfolgenden Nachführen von Gewebematerial aus der zweiten Kammer zu erlauben.

Nach einer bevorzugten Ausführungsform ist die Kopfaufprallschutzeinrichtung so gestaltet, dass sie als vollständige Baueinheit bestehend aus dem Airbagträger, dem Luftsack und dem Gasgenerator in einem einzigen Arbeitsschritt am Bordkantenträger anbringbar ist. Auf diese Weise lässt sich ein hoher Integrationsgrad im Bereich der Türverkleidung erreichen.

Vorzugsweise ist der Airbagträger mit dem Bordkantenträger verschweißt. Das Vorsehen einer Schweißverbindung stellt eine einfache Alternative dar, um eine luftdichte und feste Verbindung zwischen Airbagträger und Bordkantenträger zu schaffen. Als alternatives Fügeverfahren bietet sich das Verkleben von Airbagträger und Bordkantenträger in gleicher Weise an.

Nach einer besonders bevorzugten Ausführungsform der Erfindung weist die Fahrzeugtürverkleidung weiterhin eine Abdeckung zwischen der Luftsacklage und der Schaumschicht auf, welche so gestaltet ist, dass während des Schäumens das Schaummaterial nicht in die Airbaglage eindringt. Diese Ausführungsform der Erfindung ist insbesondere dann von Interesse, wenn das alternative Verfahren zur Vormontage einer Fahrzeugtürverkleidung durchgeführt werden soll, bei der die Kopfaufprallschutzeinrichtung bereits vor dem Hinterschäumen einer Haut auf den Bordkantenträger an dem Bordkantenträger der Fahrzeugtürverkleidung montiert wird.

Somit kann auf das Verschließen der Aussparung im Bordkantenträger mit einer Blende verzichtet werden und das Verfahren weiter vereinfacht werden. Die Abdeckung zwischen der Luftsacklage und der Schaumschicht stellt eine Trennschicht zwischen dem Gewebe des Luftsackes und der Schaumschicht dar und verhindert eine unerwünschte Verbindung zwischen beiden. Die Abdeckung kann dabei eine Kunststofffolie oder ein einseitig mit Kunststoff beschichtetes Gewebe sein. Alternativ ist es auch möglich, eine Kunststoffklappe vorzusehen. Unabhängig davon, wie die Abdeckung zwischen Luftsacklage und der Schaumschicht gebildet ist, handelt es sich jeweils bei der Abdeckung um ein Teil der vormontierbaren Kopfaufprallschutzeinrichtung, d.h. dem in einem vorgeschalteten Fertigungsschritt vormontierten Modul, das als Ganzes am Bordkantenträger der Türverkleidung angebracht werden kann.

Nach einer bevorzugten Ausführungsform der Erfindung besteht die Dekorschicht aus Kunststofffolie. Dabei kann die Kunststofffolie in Bezug auf die gewünschten optischen und haptischen Eigenschaften ausgewählt werden.

Nach einer alternativen, bevorzugten Ausführungsform besteht die Dekorschicht aus Leder, Lederimitat oder Textilmaterial, das auf die Schaumschicht aufgeklebt oder aufgespannt ist. In diesem Fall wird nicht das oben beschriebene Verfahren des Hinterschäumens, sondern des Schäumens in einer geschlossenen Form durchgeführt, woraufhin auf die Schaumschicht die Dekorschicht in einem getrennten, nachgeschalteten Fertigungsschritt aufgebracht wird.

### Kurze Beschreibung der Figuren

Nachfolgend wird die Erfindung rein beispielhaft anhand der beigefügten Figuren beschrieben, in denen
- Fig. 1: eine schematische Darstellung eines Teils einer Fahrzeugtür ist, aus der die prinzipielle Lage der Kopfaufprallschutzeinrichtung hervorgeht;
- Fig. 2: eine horizontale Schnittdarstellung durch den Türaufbau im Bereich des Bordkantenträgers sowie der Kopfaufprallschutzeinrichtung darstellt;
- Fig. 3: der Darstellung nach Fig. 2 während des Auslösens der Kopfaufprallschutzeinrichtung entspricht;
- Fig. 4: der Darstellung nach der Fig. 2 entspricht, jedoch eine alternative Ausführungsform der Erfindung darstellt;
- Fig. 5: der Darstellung nach Fig. 3 entspricht, jedoch das Auslösen der Kopfaufprallschutzeinrichtung nach Fig. 4 darstellt; und
- Fig. 6: den Bordkantenbereich der Türinnenverkleidung im Bereich einer Aussparung zur Befestigung der Kopfaufprallschutzeinrichtung während des Herstellverfahrens der Fahrzeugtürverkleidung zeigt.

### Wege zur Ausführung der Erfindung

In den nachfolgenden Figuren werden jeweils identische oder einander entsprechende Bauelemente mit denselben Referenzziffern bezeichnet.

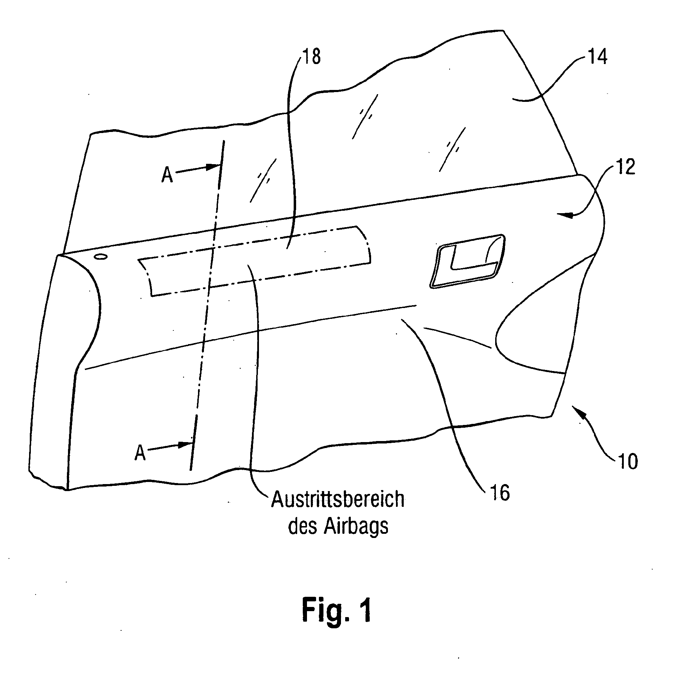

Fig. 1 zeigt den prinzipiellen Aufbau der Innenseite einer Fahrzeugtür. Die allgemein mit Referenzziffer 10 bezeichnete Fahrzeugtür ist dabei nur teilweise und insbesondere im Bereich der Bordkante 12 dargestellt, die den Bereich der Türverkleidung darstellt, der am nächsten der Seitenscheibe 14 liegt. Der Bereich der Bordkante ist hierbei derjenige Bereich, in dem sich der Übergang zwischen dem über der Armauflage (nicht dargestellt) angeordneten Mittelfeld 16 zu dem im Wesentlichen horizontal auf die Seitenscheibe 14 zulaufenden Abschlussbereich der Fahrzeugtürverkleidung befindet.

In der schematischen Darstellung der Fig. 1 ist der Anbringungsbereich 18 der Kopfaufprallschutzeinrichtung dargestellt. Es sollte aber deutlich sein, dass es sich hierbei nicht um eine von einem Fahrzeuginsassen erkennbare Position handelt. Die Kopfaufprallschutzeinrichtung nach der Erfindung ist für einen Fahrzeuginsassen nicht sichtbar. Die Darstellung in Fig. 1 wurde aber gewählt, um zum einen deutlich zu machen, dass sich der Austrittsbereich des Luftsackes nicht über die gesamte Länge der Fahrzeugtür erstreckt und zum anderen auch ausschließlich im Bereich der Bordkante 12 angeordnet ist. Im Mittelfeld 16 kann zusätzlich eine Seitenaufprallschutzeinrichtung vorgesehen sein, die allerdings nicht Gegenstand der Erfindung ist. Es soll ausschließlich eine Kopfaufprallschutzeinrichtung beschrieben werden, die zudem ausschließlich im Bereich der Bordkante 12 angeordnet ist.

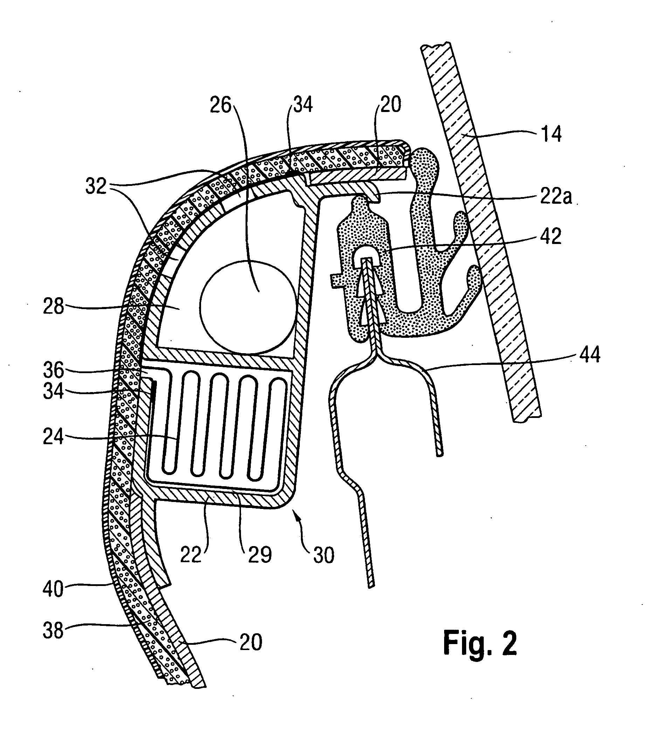

In den nachfolgenden Figuren 2 bis 6 wird jeweils ein vertikaler Schnitt durch den Türaufbau gezeigt, der beispielsweise entlang der in Fig. 1 dargestellten Linie A-A verlaufen könnte. Alle nachfolgend beschriebenen Merkmale sind für jede Einstiegstür eines Kraftfahrzeuges in gleicher Weise anwendbar, d.h. nicht nur für die Fahrertür, sondern in gleicher Weise für die Beifahrertür oder die Türen im Fond.

In der Darstellung nach Fig. 2 ist der Bordkantenträger 20 dargestellt, der in der Schnittebene der Fig. 2 eine Aussparung zur Befestigung der Kopfaufprallschutzeinrichtung 30 aufweist. Die Kopfaufprallschutzeinrichtung 30 besteht aus einem Airbagträger 22, einem Luftsack 24 und einem Gasgenerator 26, die jeweils zur Kopfaufprallschutzeinrichtung 30 zusammengefasst sind.

Sowohl der Bordkantenträger 20 wie auch Airbagträger 22 sind vorzugsweise Spritzgussteile, die z.B. aus ABS/PC bestehen können. Im dargestellten Überlappungsbereich zwischen Bordkantenträger 20 und Airbagträger 22 sind diese miteinander luftdicht verbunden, vorzugsweise verschweißt oder verklebt.

Der Airbagträger 22 weist eine erste Kammer 28 sowie eine zweite Kammer 29 auf, die angrenzend nebeneinander angeordnet sind und durch eine Wand des Airbagträgers 22 voneinander getrennt sind. Sowohl die erste Kammer 28 wie auch zweite Kammer 29 sind gasdicht gegen die Türaußenseite hin abgeschlossen. In der ersten Kammer 28 befindet sich der Gasgenerator 26. Es kann jeglicher in der Technik übliche Gasgenerator 26 eingesetzt werden, der bezogen auf die benötigte Gasmenge und Entfaltungsgeschwindigkeit des Airbags das nötige Gasvolumen bereitstellt. Der Gasgenerator ist innerhalb der ersten Kammer 28 vorgesehen und die erste Kammer 28 ist zum Airbaggewebe hin mit einer Vielzahl von Austrittsöffnungen 32 versehen, durch welche das im Gasgenerator 26 erzeugte Gas in das Airbaggewebe eingeführt werden kann. Das Airbaggewebe ist an den Position 34 fest und gasdicht mit dem Airbagträger 22 verbunden. Im Bereich der zweiten Kammer 29 kann anstelle der, auf der Kammerinnenseite gelegenen, schwer zugänglichen Befestigungsstelle auch eine Befestigung auf der Außenseite der Kammer erfolgen.

Beginnend an der näher zur Seitenscheibe 14 gelegenen Befestigungsstelle 34 des Luftsackes erstreckt sich eine Lage des Luftsackes über die mit den Austrittsöffnungen 32 versehene Wand der ersten Kammer 28 zu einer schlitzförmigen Durchtrittsöffnung 36 in die zweite Kammer 29. Im Bereich der zweiten Kammer 29 ist der Luftsack 24 eng gefaltet und möglichst kompakt untergebracht. Auf dem Bordkantenträger 20, Airbagträger 22 und, wo anwendbar, Gewebe des Luftsackes 24 befindet sich eine Schaumschicht 38, die z.B. aus PU-Schaum besteht. Den zur Fahrzeuginnenseite hin gerichteten Abschluss der Türverkleidung bildet eine auf der Schaumschicht 38 aufgebrachte Dekorschicht 40.

Wie weiterhin aus Fig. 2 ersichtlich ist, ist der Airbagträger mit einer Befestigungsnase 22a versehen, welche um eine Türdichtung 42 greift, welche wiederum auf dem aus Metall bestehenden Rohbau der Fahrzeugtür aufgesteckt ist. Somit ist der Airbagträger 22 auch gegen den Rohbau 44 fixiert, ohne dass es allerdings eines gesonderten Verfahrensschrittes zur Befestigung bedarf. Die entsprechende Fixierung erfolgt automatisch bei der Anbringung der Fahrzeugtürverkleidung.

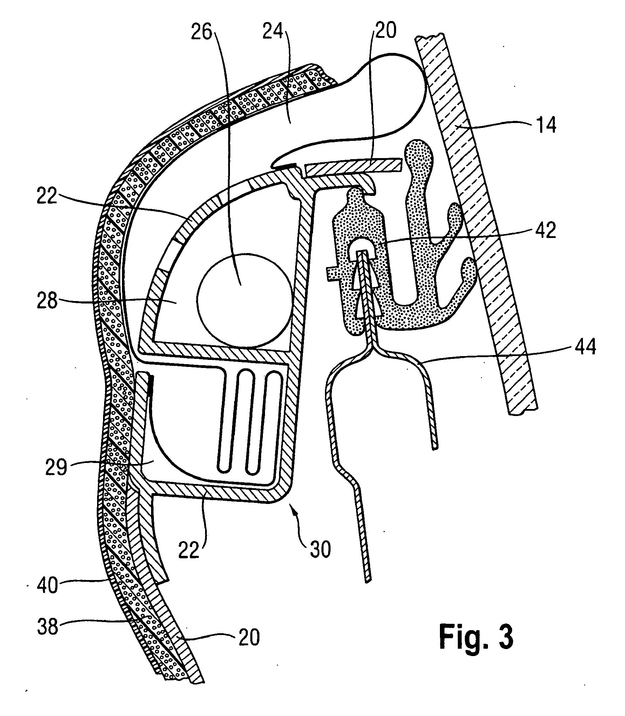

Fig. 3 zeigt die Auslösung der Kopfaufprallschutzeinrichtung durch einen nicht dargestellten Sensor. Wie ersichtlich ist, entfaltet sich durch das vom Gasgenerator 26 abgegebene Gas der Luftsack 24, wobei sich die Schaumschicht 38 und die mit der Schaumschicht verbundene Dekorschicht 40 sowohl vom Airbagträger 22 wie auch Bordkantenträger 20 abheben. Es bedarf keiner gesonderten Materialschwächung in der Schaumschicht 38 oder Dekorschicht 40, weil aufgrund der Elastizität der Schaumschicht sich diese durch den Druck des sich entfaltenden Luftsacks so verformt, dass der Luftsack in unmittelbarer Nähe der Seitenscheibe 14 und nach oben entfaltet werden kann. Der Airbagträger 22 wie auch Bordkantenträger 20 bleiben dabei an ihrer Position - es wird lediglich die aus Schaumschicht und Dekorschicht bestehende Einheit so unter den Druck des sich füllenden Luftsackes 24 verformt, dass dieser nach oben entsprechend seiner Funktion als Kopfaufprallschutzeinrichtung austreten kann.

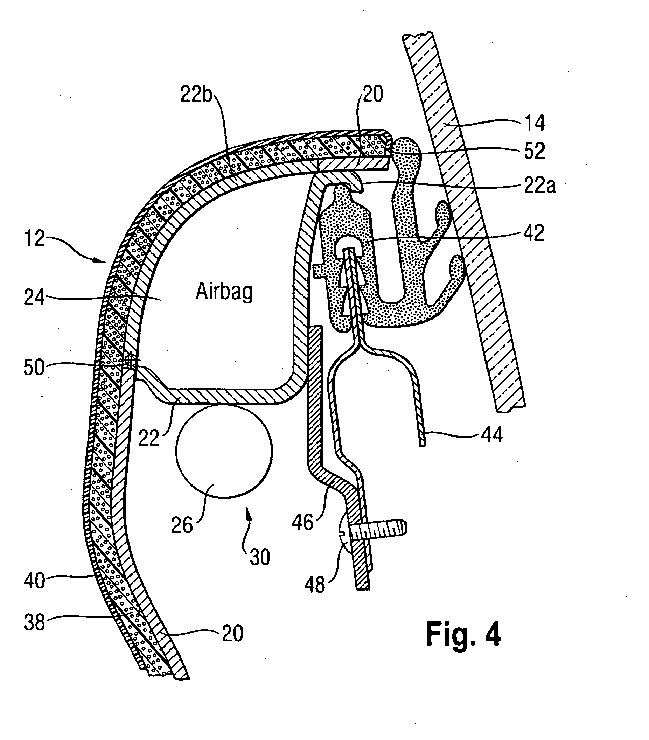

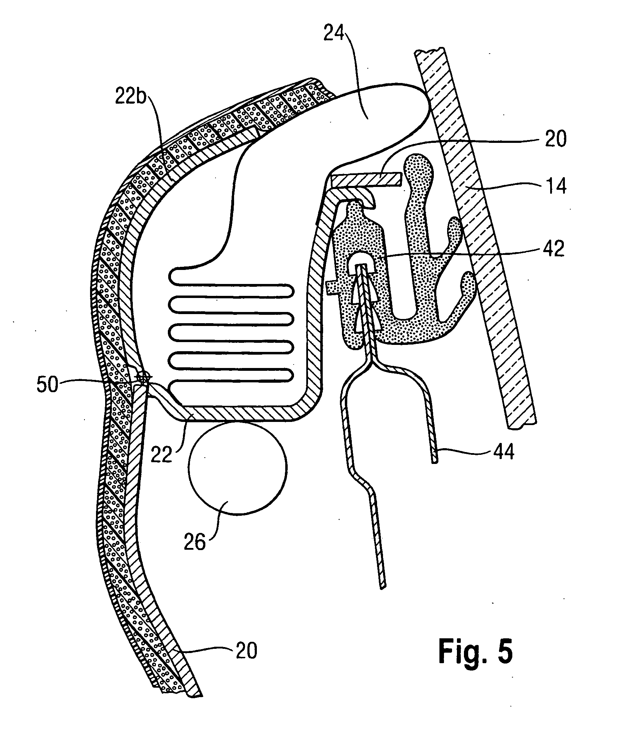

Die in den Fig. 4 und 5 dargestellte Ausführungsform unterscheidet sich von denjenigen nach Fig. 2 und 3 dahingehend, dass die Kopfaufprallschutzeinrichtung 30 eine unterschiedliche Gestaltung besitzt und hierdurch auch bei deren Auslösung geringfügig unterschiedliche Gegebenheiten auftreten. Die Ausführungsform nach Fig. 4 und 5 ist in Bezug auf die Gestaltung des Bordkantenträgers 20, der mit einer Aussparung versehen ist, dem darüber liegenden Aufbau bestehend aus Schaumschicht 38 und Dekorschicht 40, der als Teil des Airbagträgers 22 ausgeführten Befestigungsnase 22a zum Umgreifen der auf dem Rohbau 44 der Fahrzeugtür aufgesteckten Türdichtung 42 sowie der Tatsache, dass die Kopfaufprallschutzeinrichtung 30 als eine komplette Baueinheit bestehend aus Airbagträger 22, Luftsack 24 und Gasgenerator 26 montierbar ist, identisch zur Ausführungsform nach den Fig. 2 und 3.

Der Unterschied zur Ausführungsform nach Fig. 2 und 3 besteht darin, dass der Airbagträger 22 nur eine einzige Kammer bildet, in der der Luftsack 24 gefaltet untergebracht ist. Der Gasgenerator 26 ist nicht innerhalb der Kammer angeordnet, sondern außerhalb dieser Kammer, jedoch fest mit dem Airbagträger 22 verbunden, um die oben beschriebene Möglichkeit einer einfachen Montage in Form vormontierter Module zu bieten. Der Airbagträger 22 kann optional über eine an diesem fest angebrachte, z.B. angeschweißte oder angeklebte Lasche 46 mittels eines Verbindungselementes 48 fest mit dem Rohbau 44 verbunden sein. Als Verbindungselement 48 können Schrauben, aber auch Befestigungsklipse verendet werden. Das Vorsehen der Lasche 46 ist aber nur optional zu sehen. Wesentlich ist, dass die Kopfaufprallschutzeinrichtung 30 als Teil der gesamten Fahrzeugtürverkleidung vormontiert werden kann und mit der Montage der Fahrzeugtürverkleidung in der Fahrzeugtür in einem Arbeitsgang angebracht werden kann.

Wie aus Fig. 4 ersichtlich ist, ist der Airbagträger 22 mit einem Wandabschnitt 22b versehen, in dem sich keine Durchtrittsöffnungen für Gas befinden. Als Folge daraus muss bei der Auslösung der Kopfaufprallschutzeinrichtung 30 der Wandabschnitt 22b des Airbagträgers 22 gemeinsam mit der elastischen Schaumschicht 38 und der darauf angeordneten Dekorschicht 40 verformt werden. Bei der Ausführungsform nach Fig. 2 und 3 waren keine zusätzlichen Maßnahmen erforderlich, um die leicht verformbare Einheit aus Schaumschicht und Dekorschicht soweit zu verformen, dass der Airbag 24 nahe der Scheibe 14 der Fahrzeugtür auftreten kann. Bei der Ausführungsform nach Fig. 4 und 5 unter Verwendung eines relativ starr ausgestalteten Wandabschnitts 22b ist hingegen eine entsprechende Maßnahme zu ergreifen, damit sich der Wandabschnitt 22b in einer vorbestimmten und gewünschten Weise verformt. Wie aus der Abfolge der Fig. 4 und 5 ersichtlich ist, bewegt sich bei dem Entfalten des Luftsackes 24 der Wandabschnitt 22b um einen im Wesentlichen horizontal in der Fahrzeugtürverkleidung angeordneten Drehpunkt 50. Die darüber liegende Schaumschicht 38 wie auch Dekorschicht 40 sind ausreichend formveränderlich, um ohne zusätzliche Maßnahmen die Bewegung des Wandabschnitts 22b um den Drehpunkt 50 mit durchzuführen.

Der Drehpunkt 50 im Airbagträger 22 kann durch eine gezielte Schwächung des Materials in diesem Bereich durchgeführt werden. Diese Schwächung wird vorzugsweise während der Produktion der Kopfaufprallschutzeinrichtung 30 werkzeugfallend hergestellt.

Auch bei der Ausführungsform nach Fig. 4 und 5 ist es entscheidend, dass zum einen die Kopfaufprallschutzeinrichtung 30 als komplett vormontierte Gesamteinheit einschließlich Gasgenerator vormontierbar ist. Weiterhin ist entscheidend, dass die Kopfaufprallschutzeinrichtung ausschließlich im Bordkantenbereich 12 der Fahrzeugtürverkleidung angeordnet ist und sich nicht bis ins Mittelfeld der Türverkleidung erstreckt. Auch bei der Ausführungsform nach Fig. 4 und 5 ist die horizontale Erstreckung der Kopfaufprallschutzeinrichtung beschränkt, wie dies anhand der Fig. 1, deren Abmessungen 18 auch mit der im Bordkantenträger 20 gebildeten Aussparung gleichzusetzen ist, angedeutet wurde.

Beiden Ausführungsformen ist zudem gemeinsam, dass beim Auslösen der Kopfaufprallschutzeinrichtung, d.h. beim Schuss des Headbagsystems, der Schaum im Bereich des Bordkantenträgers durchtrennt wird und zusätzlich die Dekorschicht 40 in unmittelbarer Nähe zur Seitenscheibe 14 mit einem Umbug 52 versehen sein kann, aus dem die Dekorschicht durch den sich entfaltenden Luftsack 24 herausgezogen wird. Eine weitere Gemeinsamkeit der beiden Ausführungsformen besteht darin, dass die Kopfaufprallschutzeinrichtung 30 jeweils so gestaltet ist, dass deren Lage von der Fahrzeuginnenseite her nicht erkennbar ist.

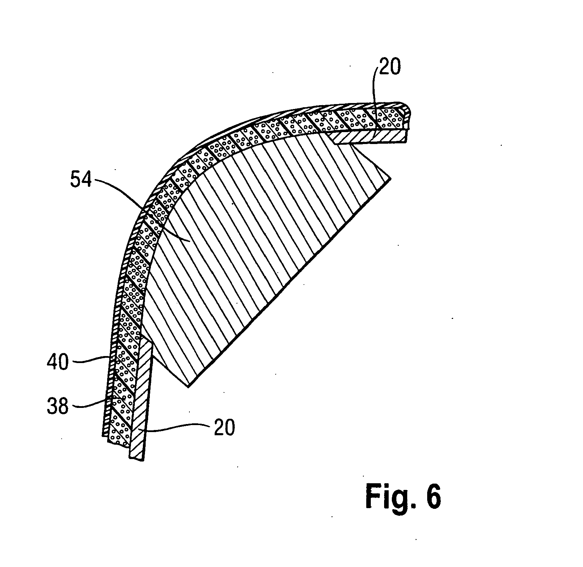

Fig. 6 zeigt schematisch einen Zwischenschritt während der Herstellung der erfindungsgemäßen Fahrzeugtürverkleidung. Nachdem in einem ersten Arbeitsschritt die im Bordkantenträger 20 vorgesehene Aussparung zur Aufnahme der Kopfaufprallschutzeinrichtung mit Hilfe einer Blende 54 fest verschlossen wurde, wurde auf den mit der Blende verschlossenen Bordkantenträger die Schaumschicht 38 sowie Dekorschicht 40 erzeugt. Wie bereits erläutert, kann diese sowohl durch das Hinterschäumen oder aber durch das Aufschäumen der Schaumschicht in einer geschlossenen Form und das anschließende Aufbringen einer Dekorschicht 40 erfolgen. Fig. 6 zeigt diesen Zeitpunkt im Verfahrensablauf, d.h. die Schaumschicht und Dekorschicht sind bereits aufgebracht worden und die Blende 54 zur Abdichtung der Aussparung im Bordkantenträger ist noch vorhanden. In dem darauf folgenden Verfahrensschritt wird die Blende 54 wieder vom Bordkantenträger gelöst und entnommen und anstelle der Blende die als komplette Baueinheit vorgesehene Kopfaufprallschutzeinrichtung eingesetzt und befestigt. Die Blende hat somit während des Hinterschäumens oder Aufschäumens als Platzhalter für die noch nicht mit dem Bordkantenträger 20 fest verbundene Kopfaufprallschutzeinrichtung gedient. Die anhand der Fig. 6 dargestellte Vorgehensweise kann bei sämtlichen oben dargestellten Ausführungsformen verwendet werden.

In gleicher Weise ist es aber auch möglich, den Herstellungsablauf dahingehend abzuändern, dass noch vor dem Aufbringen der Schaum- und Dekorschicht die gesamte Kopfaufprallschutzeinrichtung an dem Bordkantenträger der Fahrzeugtürverkleidung befestigt wird und anschließend eine Haut auf den Bordkantenträger sowie im Bereich der Kopfaufprallschutzeinrichtung hinterschäumt wird. Bei der in Fig. 4 dargestellten Ausführungsform sind hierzu keine speziellen Maßnahmen zu treffen, da der Wandabschnitt 22b des Airbagträgers 22 das Eindringen von Schaum in die mit dem gefalteten Luftsack 24 gefüllte Kammer verhindert. Bei der in den Fig. 2 und 3 dargestellten Ausführungsform wird die über die erste Kammer 28 geführte Gewebelage des Luftsackes 24 vor einem Anhaften des Schaummaterials gehindert, indem eine Abdeckung über der Luftsacklage der Kopfaufprallschutzeinrichtung angeordnet ist. Die Abdeckung verhindert das Eindringen während des Schäumens des Schaummaterials in die Lage des Luftsackes.

Die erfindungsgemäße Fahrzeuginnenverkleidung ist besonders variabel, da diese bereits mit einem vollständig vormontierten Modul der Kopfaufprallschutzeinrichtung versehen werden kann und zudem auch die Reihenfolge der Fertigungsschritte für die Anbringung der Kopfaufprallschutzeinrichtung an der Fahrzeugtürverkleidung variabel ist.

Bei allen dargestellten Ausführungsformen handelt es sich gezielt um einen auch als Headbag bezeichneten Luftsack zum Schutz des Kopfes eines Insassen, nicht um einen sogenannten Seitenaufprallschutz. Daher ist die Kopfaufprallschutzeinrichtung auch ausschließlich im Bordkantenträger, d.h. im obersten Bereich der Fahrzeugtürverkleidung angeordnet, wodurch sich beim Entfalten des Luftsackes eine sehr schnelle Ansprechzeit erzielen lässt und zum anderen auch das Volumen des Luftsackes geringer ausfallen kann als im Falle der Anbringung im Mittelfeld der Fahrzeugtürverkleidung.

## Patentansprüche

1. Fahrzeugtürverkleidung für ein Kraftfahrzeug mit einer Kopfaufprallschutzeinrichtung (30) für einen Fahrzeuginsassen, umfassend:
(a) einen Bordkantenträger (20) der Fahrzeugtürverkleidung, in dem sich eine Aussparung (18) zur Befestigung der Kopfaufprallschutzeinrichtung (30) in einem Bereich in Montageposition der Fahrzeugtürverkleidung nahe der Seitenscheibe (14) der Fahrzeugtür befindet;
(b) eine Kopfaufprallschutzeinrichtung (30), die
(i) einen luftdicht mit dem Bordkantenträger (20) verbundenen Airbagträger (22),
(ii) einen Luftsack (24), der randseitig am Airbagträger (22) luftdicht befestigt ist, und
(iii) einen Gasgenerator (26), der fest mit dem Airbagträger (22) verbunden ist, umfasst;
(c) eine Schaumschicht (38) über dem Bordkantenträger (20) sowie, im Bereich der Aussparung (18), über dem Airbagträger (22); und
(d) eine Dekorschicht (40) auf der dem Bordkantenträger (22) abgewandten Seite der Schaumschicht (38); wobei
(e) die Schaumschicht (38) ausreichend elastisch ist, dass sie sich bei Auslösung der Kopfaufprallschutzeinrichtung leicht vom Airbagträger (22) abhebt, so dass sich der Austrittspfad des Luftsacks (24) zwischen Airbagträger (22) und Schaumschicht (38) befindet.

2. Fahrzeugtürverkleidung nach Anspruch 1,
**dadurch gekennzeichnet, dass**
die Kopfaufprallschutzeinrichtung (30) mindestens eine Befestigungseinrichtung (22a; 46, 48) zum Herstellen einer Verbindung mit dem Rohbau (44) der Fahrzeugtür aufweist.

3. Fahrzeugtürverkleidung nach Anspruch 2,
**dadurch gekennzeichnet, dass**
die mindestens eine Befestigungseinrichtung im Montagezustand einen Teil der mit dem Rohbau (44) der Fahrzeugtür verbundenen Türdichtung (42) umgreift.

4. Fahrzeugtürverkleidung nach einem der vorhergehenden Ansprüche,
**dadurch gekennzeichnet, dass**
der Airbagträger (22) eine zur Innenseite der Fahrzeugtür gasdicht abgeschlossene erste Kammer (28) aufweist, in welcher der Gasgenerator (26) angeordnet ist, wobei die erste Kammer (28) mindestens eine, vorzugsweise eine Vielzahl von Durchtrittsöffnungen (32) für Gas auf der zur Schaumschicht (38) gewandten Seite der ersten Kammer (28) aufweist.

5. Fahrzeugtürverkleidung nach Anspruch 4,
**dadurch gekennzeichnet, dass**
die erste Kammer (28) auf der zur Schaumschicht (38) weisenden Seite von einer einzelnen Lage des Gewebes des Luftsackes (24) bedeckt ist.

6. Fahrzeugtürverkleidung nach Anspruch 4 oder Anspruch 5,
**dadurch gekennzeichnet, dass**
der Airbagträger (22) eine zweite Kammer (29) aufweist, welche auf der von der Schaumschicht (38) entfernten Seite gasdicht abgeschlossen ist und dimensioniert ist, um kompakt gefaltete Lagen des Luftsackes (24) aufzunehmen.

7. Fahrzeugtürverkleidung nach Anspruch 6,
**dadurch gekennzeichnet, dass**
die zweite Kammer (29) zur Schaumschicht (38) hin eine schlitzförmige Durchtrittsöffnung (36) für das Gewebe des Luftsackes (24) aufweist, wobei der Öffnungsquerschnitt der schlitzförmigen Durchtrittsöffnung (36) geringer ist als die Querschnittsabmessungen der zweiten Kammer (29).

8. Fahrzeugtürverkleidung nach einem der vorgehenden Ansprüche,
**dadurch gekennzeichnet, dass**
die Kopfaufprallschutzeinrichtung (30) so gestaltet ist, dass sie als vollständige Baueinheit bestehend aus dem Airbagträger (22), dem Luftsack (24) und dem Gasgenerator (26) in einem einzigen Arbeitsschritt am Bordkantenträger (20) anbringbar ist.

9. Fahrzeugtürverkleidung nach einem der vorgehenden Ansprüche,
**dadurch gekennzeichnet, dass**
der Airbagträger (22) mit dem Bordkantenträger (20) verschweißt ist.

10. Fahrzeugtürverkleidung nach einem der Ansprüche 1 bis 8,
**dadurch gekennzeichnet, dass**
der Airbagträger (22) mit dem Bordkantenträger (20) verklebt ist.

11. Fahrzeugtürverkleidung nach einem der vorgehenden Ansprüche, weiter umfassend eine Abdeckung zwischen der Gewebelage des Luftsackes (24) und der Schaumschicht (38), welche so gestaltet ist, dass während des Schäumens das Schaummaterial der Schaumschicht (38) nicht in die Gewebelage des Luftsackes (24) eindringt.

12. Fahrzeugtürverkleidung nach Anspruch 11,
**dadurch gekennzeichnet, dass**
die Abdeckung eine Kunststofffolie ist, die Teil der vormontierbaren Kopfaufprallschutzeinrichtung (30) ist.

13. Fahrzeugtürverkleidung nach Anspruch 11,
**dadurch gekennzeichnet, dass**
die Abdeckung eine Kunststoffklappe ist, die Teil der vormontierbaren Kopfaufprallschutzeinrichtung (30) ist.

14. Fahrzeugtürverkleidung nach einem der vorhergehenden Ansprüche,
**dadurch gekennzeichnet, dass**
die Dekorschicht (40) aus Kunststofffolie besteht.

15. Fahrzeugtürverkleidung nach einem der Ansprüche 1 bis 13,
**dadurch gekennzeichnet, dass**
die Dekorschicht aus Leder, Lederimitat oder Textilmaterial besteht, das auf die Schaumschicht (38) aufgeklebt oder aufgespannt ist.

16. Fahrzeugtür mit einer Fahrzeugtürverkleidung nach einem der vorhergehenden Ansprüche.

17. Fahrzeug mit mindestens einer Fahrzeugtür nach Anspruch 16.

18. Verfahren zur Vormontage einer Fahrzeugtürverkleidung nach Anspruch 1, umfassend die Schritte
(i) Verschließen der Aussparungen im Bordkantenträger der Fahrzeugtürverkleidung mit einer abnehmbaren Blende;
(ii) Hinterschäumen einer Haut auf den Bordkantenträger;
(iii) Abnehmen der Blende; und
(iv) Einsetzen und Befestigen der Kopfaufprallschutzeinrichtung.

19. Verfahren zur Vormontage einer Fahrzeugtürinnenverkleidung nach einem der Ansprüche 11 bis 13, umfassend die Schritte:
(i) Montage einer Kopfaufprallschutzeinrichtung an dem Bordkantenträger der Fahrzeugtürverkleidung; und
(ii) Hinterschäumen einer Haut auf den Bordkantenträger.

20. Verfahren nach Anspruch 18 oder 19, wobei anstelle des Schrittes (ii) folgende Schritte ausgeführt werden:
(ii1) Erzeugen der Schaumschicht in einer geschlossenen Form; und in einem getrennten, nachfolgenden Schritt
(ii2) Aufbringen, vorzugsweise aufkleben der Dekorschicht auf die Schaumschicht.

## Claims

1. Vehicle door trim for a motor vehicle with a head impact protection device (30) for a vehicle occupant, comprising:
(a) a curb carrier (20) of the vehicle door trim in which a cutout (18) for fixing of the head impact protection device (30) is situated in an area close to the side window (14) of the vehicle door;
(b) a head impact protection device (30) which comprises
(i) an airbag carrier (22) joined so as to be airtight to the curb carrier (20);
(ii) an airbag (24) which is fixed to the airbag carrier (22) on the rim side; and
(iii) a gas generator (26) which is fixedly attached to the airbag carrier (22);
(c) a foam layer (38) over the curb carrier (20) as well as, in the area of the cutout (18), over the airbag carrier (22); and
(d) a decorative layer (40) on the side of the foam layer (38) facing away from the curb carrier (20); whereby
(e) the foam layer (38) is sufficiently elastic that it lifts easily from the airbag carrier (20) on actuation of the head impact protection device, so that the exit of the airbag (24) is positioned between the airbag carrier (22) and the foam layer (38).

2. Vehicle door trim according to claim 1,
**characterised in that**
the head impact protection device (30) has at least one fixing device (22a; 46, 48) to create a joint with the body-in-white(44) of the vehicle door.

3. Vehicle door trim according to claim 2,
**characterised in that**
the at least one fixing device encompasses a part of the door seal (42) joined to the body-in-white (44) of the vehicle door in the assembled state.

4. Vehicle door trim according to one of the preceding claims,
**characterised in that**
the airbag carrier (22) has a first chamber (28) sealed so as to be gastight against the inside of the vehicle door in which the gas generator (26) is disposed, whereby the first chamber (28) has at least one, preferably a plurality of openings (32) for gas on the side of the first chamber (28) facing the foam layer (38).

5. Vehicle door trim according to claim 4,
**characterised in that**
the first chamber (28) on the side pointing towards the foam layer (38) is covered by a single layer of the airbag fabric (24).

6. Vehicle door trim according to claim 4 or claim 5,
**characterised in that**
the airbag carrier (22) has a second chamber (29) which is sealed so as to be gastight on the side away from the foam layer (38) and is dimensioned to accommodate compactly folded layers of the airbag (24).

7. Vehicle door trim according to claim 6,
**characterised in that**
the second chamber (29) facing towards the foam layer (38) has a slot-shaped opening (36) for the airbag fabric (24), whereby the opening cross-section of the slot-shaped opening (36) is smaller than the cross-sectional dimensions of the second chamber (29).

8. Vehicle door trim according to one of the preceding claims,
**characterised in that**
the head impact protection device (30) is designed such that it is capable of attachment to the curb carrier (20) in one work step as a complete structural unit consisting of the airbag carrier (22), the airbag (24) and the gas generator (26).

9. Vehicle door trim according to one of the preceding claims,
**characterised in that**
the airbag carrier (22) is welded to the curb carrier (20).

10. Vehicle door trim according to one of claims 1 to 8,
**characterised in that**
the airbag carrier (22) is adhered to the curb carrier (20).

11. Vehicle door trim according to one of the preceding claims, further comprising a cover between the fabric layer of the airbag (24) and the foam layer (38) which is designed such that the foam layer (38) does not penetrate into the fabric layer of the airbag (24) during foaming of the foam material.

12. Vehicle door trim according to claim 11,
**characterised in that**
the cover is a plastic film which is part of the head impact protection device (30) capable of pre-assembly.

13. Vehicle door trim according to claim 11,
**characterised in that**
the cover is a plastic flap which is part of the head impact protection device (30) capable of pre-assembly.

14. Vehicle door trim according to one of the preceding claims,
**characterised in that**,
the decorative layer (40) consists of a plastic film.

15. Vehicle door trim according to one of claims 1 to 13,
**characterised in that**
the decorative layer consists of leather, imitation leather or textile material which is adhered to or stretched over the foam layer (38).

16. Vehicle door with a vehicle door trim according to one of the preceding claims.

17. Vehicle with at least one vehicle door according to claim 16.

18. Method for pre-assembly of a vehicle door trim according to claim 1, comprising the steps:
(i) sealing of the cutouts in the curb carrier of the vehicle door trim with a removable masking cover;
(ii) back-foaming of a skin in the curb carrier;
(iii)removal of the masking cover; and
(iv) insertion and fixing of the head impact protection device.

19. Method for pre-assembly of an interior vehicle door trim according to one of claims 11 to 13, comprising the steps:
(i) installation of a head impact protection device on the curb carrier of the vehicle door trim; and
(ii) back-foaming of a skin on the curb carrier.

20. Method according to claims 18 or 19, whereby instead of step (ii) the following steps are carried out:
(ii1)generation of a foam layer in a closed mold; and in a separate subsequent step
(ii2)application, preferably adhering of the decorative layer onto the foam layer.

## Revendications

1. Habillage de portière de véhicule, pour un véhicule automobile équipé d'un dispositif de protection contre les chocs de la tête (30) pour un passager de véhicule, comprenant :
(a) un support d'arête de bord (20) de l'habillage de portière de véhicule, dans lequel se trouve un évidement (18) pour la fixation du dispositif de protection contre les chocs de la tête (30), dans une zone qui, lorsque l'habillage de portière de véhicule est en position de montage, est proche de la vitre latérale (14) de la portière de véhicule ;
(b) un dispositif de protection contre les chocs de la tête (30), qui comprend
(i) un support de sac gonflable de sécurité (22), relié de façon étanche à l'air au support d'arête de bord (20),
(ii) un sac à air (24) fixé côté bordure, de façon étanche à l'air, sur le support de sac gonflable de sécurité (22), et
(iii) un générateur de gaz (26), reliée rigidement au support de sac gonflable de sécurité (22),
(c) une couche en matériau alvéolaire (38), sur le support d'arête de bord (20) ainsi que dans la zone de l'évidement (18), sur le support de sac gonflable de sécurité (22) ; et
(d) une couche de décoration (40) sur la face, opposée au support d'arête de bord (22), de la couche en matériau alvéolaire (38) ; où
(e) la couche en matériau alvéolaire (38) est suffisamment élastique, en ce que, lors du déclenchement du dispositif de protection contre les chocs de la tête, elle se soulève légèrement du support de sac gonflable de sécurité (22), de manière que le chemin de sortie du sac à air (24) se trouve entre le support de sac gonflable de sécurité (22) et la couche en matériau alvéolaire (38).

2. Habillage de portière de véhicule selon la revendication 1, **caractérisé en ce que** le dispositif de protection contre les chocs sur la tête (30) présente au moins un dispositif de fixation (22a ; 46, 48) pour établir une liaison avec la construction brute (44) de la portière de véhicule.

3. Habillage de portière de véhicule selon la revendication 2, **caractérisé en ce que** le au moins un dispositif de fixation, à l'état de montage, entoure une partie du joint d'étanchéité de portière (42) relié à la construction brute (44) de la portière de véhicule.

4. Habillage de portière de véhicule selon l'une des revendications précédentes, **caractérisé en ce que** le support de sac gonflable de sécurité (22) présente une première chambre (28), fermée de façon étanche aux gaz par rapport à la face intérieure de la portière de véhicule, chambre dans laquelle est disposée le générateur de gaz (26), la première chambre (28) présentant au moins une, de préférence une pluralité d'ouvertures de passage (32) pour du gaz, sur la face, tournée vers la couche en matériau alvéolaire (38), de la première chambre (28).

5. Habillage de portière de véhicule selon la revendication 4, **caractérisé en ce que** la première chambre (28), sur la face tournée vers la couche en matériau alvéolaire (38), est couverte d'une couche individuelle du tissu du sac à air (24).

6. Habillage de portière de véhicule selon la revendication 4 ou la revendication 5, **caractérisé en ce que**
- le support de sac gonflable de sécurité (22) présente une deuxième chambre (29), fermée de façon étanche aux gaz sur le côté éloigné de la couche en matériau alvéolaire (38) et dimensionnée pour héberger des couches, ayant été pliées de façon compacte, du sac à air (24).

7. Habillage de portière de véhicule selon la revendication 6, **caractérisé en ce que** la deuxième chambre (29) présente, orientée vers la couche en matériau alvéolaire (38), une ouverture de passage (36) en forme de fente pour le tissu du sac à air (24), la section transversale d'ouverture de l'ouverture de passage (36) en forme de fente étant plus petite que les dimensions de section transversale de la deuxième chambre (29).

8. Habillage de portière de véhicule selon l'une des revendications précédentes, **caractérisé en ce que** le dispositif de protection contre les chocs sur la tête (30) est configuré de manière qu'il puisse être monté en tant qu'ensemble complet, composé du support de sac gonflable de sécurité (22), du sac à air (24) et du générateur de gaz (26), en une étape opératoire unique, sur le support d'arête de bord (20).

9. Habillage de portière de véhicule selon l'une des revendications précédentes, **caractérisé en ce que** le support de sac gonflable de sécurité (22) est soudé au support d'arête de bord (20).

10. Habillage de portière de véhicule selon l'une des revendications 1 à 8, **caractérisé en ce que** le support de sac gonflable de sécurité (22) est collé au support d'arête de bord (20).

11. Habillage de portière de véhicule selon l'une des revendications précédentes, comprenant en outre un recouvrement, entre la couche de tissu du sac à air (24) et la couche en matériau alvéolaire (38), configuré de manière que, pendant le moussage, le matériau alvéolaire de la couche de matériau alvéolaire (38) ne pénètre pas dans la couche de tissu du sac à air (24).

12. Habillage de portière de véhicule selon la revendication 11, **caractérisé en ce que** le recouvrement est une feuille de matière synthétique faisant partie du dispositif de protection contre les chocs sur la tête (30) susceptible d'être prémonté.

13. Habillage de portière de véhicule selon la revendication 11, **caractérisé en ce que** le recouvrement est un volet en matière synthétique constituant une partie du dispositif de protection contre les chocs sur la tête (30) susceptible d'être prémonté.

14. Habillage de portière de véhicule selon l'une des revendications précédentes, **caractérisé en ce que** la couche de décoration (40) est formée d'une feuille de matière synthétique.

15. Habillage de portière de véhicule selon l'une des revendications 1 à 13, **caractérisé en ce que** la couche de décoration est composée de cuir, d'une imitation cuir ou d'un matériau textile, rapporté par collage ou tendu sur la couche en matériau alvéolaire (38).

16. Portière de véhicule, équipée d'un habillage de portière de véhicule selon l'une des revendications précédentes.

17. Véhicule, comprenant au moins une portière de véhicule selon la revendication 16.

18. Procédé de prémontage d'un habillage de portière de véhicule selon la revendication 1, comprenant les étapes suivantes :
(i) fermeture des évidements dans le support d'arête de bord de l'habillage de portière de véhicule, en utilisant un écran amovible ;
(ii) moussage sur la face postérieure d'une peau sur le support d'arête de bord ;
(iii) enlèvement de l'écran ; et
(iv) insertion et fixation du dispositif de protection contre les chocs sur la tête.

19. Procédé de prémontage d'un habillage intérieur pour portière de véhicule selon l'une des revendications 11 à 13, comprenant les étapes suivantes :
(i) montage d'un dispositif de protection contre les chocs de la tête sur le support d'arête de bord de l'habillage de portière de véhicule ; et
(ii) moussage, sur la face postérieure, d'une peau sur le support d'arête de bord.

20. Procédé selon la revendication 18 ou 19, sachant que, au lieu de l'étape (ii), sont effectuées les étapes suivantes :
(ii1) production de la couche en matériau alvéolaire dans un moule fermé ; et en une étape subséquente, séparée,
(ii2) application, de préférence application par collage, de la couche de décoration sur la couche en matériau alvéolaire.
